(19) **Europäisches Patentamt**
**European Patent Office**
**Office européen des brevets**

(11) **EP 2 732 243 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **12737752.1**

(22) Anmeldetag: **11.07.2012**

(51) Int Cl.:
*G01D 18/00* (2006.01)    *G01D 5/20* (2006.01)

(86) Internationale Anmeldenummer:
**PCT/EP2012/063525**

(87) Internationale Veröffentlichungsnummer:
**WO 2013/007734 (17.01.2013 Gazette 2013/03)**

(54) **VERFAHREN ZUM ÜBERPRÜFEN DER PLAUSIBILITÄT DER AUSGANGSSIGNALE EINES RESOLVERS**

METHOD FOR TESTING THE PLAUSABILITY OF OUTPUT SIGNALS OF A RESOLVER

PROCÉDÉ DE CONTRÔLE DE LA VRAISEMBLANCE DE SIGNAUX DE SORTIE D'UN RÉSOLVEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2011 DE 102011079116**

(43) Veröffentlichungstag der Anmeldung:
**21.05.2014 Patentblatt 2014/21**

(73) Patentinhaber: **KUKA Roboter GmbH**
**86165 Augsburg (DE)**

(72) Erfinder: **HAGENAUER, Andreas**
**86316 Friedberg (DE)**

(74) Vertreter: **Patentanwälte**
**Funk & Böss GbR**
**Sigmundstraße 1**
**80538 München (DE)**

(56) Entgegenhaltungen:
**DE-A1-102006 007 871    DE-A1-102007 057 376**

EP 2 732 243 B1

**Beschreibung**

Die Erfindung betrifft ein Verfahren zum Überprüfen der Plausibilität der Ausgangssignale eines Resolvers.

Um die Winkelstellung zweier Glieder einer Maschine, die relativ zueinander bezüglich einer Drehachse gedreht werden können, zu bestimmen, werden so genannte Resolver verwendet. Ein Beispiel einer Maschine mit einem relativ zueinander drehbaren Glied ist ein Roboter. Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während des Betriebs die Bewegungsabläufe des Roboterarms steuern bzw. regeln. Die Antriebe sind z.B. elektrische Antriebe und die Glieder sind relativ zueinander bezüglich Drehachsen drehbar gelagert.

Resolver sind dem Fachmann an sich z.B. aus der EP 2 211 148 A2 bekannt. Unter einem Resolver versteht man einen elektromagnetischen Messumformer zur Wandlung der Winkelstellung zweier relativ zueinander bewegter Bauteile in elektrische Ausgangssignale. Zwei relativ zueinander bewegte Bauteile sind beispielsweise zwei bezüglich einer Drehachse drehbar gelagerte Glieder oder ein Rotor eines Motors, der sich relativ zum Stator des Motors dreht. Die Ausgangssignale sind in der Regel zwei um 90° Phasen verschobene sinusförmige elektrische Signale, insbesondere zwei um 90° Phasen verschobene sinusförmige elektrische Spannungen, aufgrund derer die Winkelstellung modulo n ermittelt werden kann, wobei n die so genannte Polpaarzahl des Resolvers ist, die sich aus der Anordnung von Spulenwicklungen ergibt und eine kleine positive natürliche Zahl ist, und auch 1 sein kann.

DE 10 2007 057376 offenbart eine Überprüfung der Plausibilität eines Resolvers durch einen Vergleich der Summe der Quadrate der Ausgangssignale des Resolvers mit einem konstanten idealisierten Soll-Wert.

Die Aufgabe der Erfindung ist es, ein verbessertes Verfahren zum Überprüfen der Plausibilität der Ausgangssignale eines Resolvers anzugeben. Insbesondere erlaubt diese Plausibilitätsprüfung, aufgrund der Messwerte des Resolvers mit einer Polpaarzahl n > 1 (dies trifft zumindest auf die in der Robotik gebräuchlichen Resolver zu), Rückschlüsse auf den tatsächlichen Motorwinkel und nicht nur modulo n, wie es dem aktuellen Stand der Technik entspricht, zu ziehen.

Die Aufgabe der Erfindung wird gelöst durch ein Verfahren zum Überprüfen der Plausibilität der Ausgangssignale eines Resolvers, mittels derer eine Winkelstellung zweier bezüglich einer Drehachse drehbar gelagerter Glieder einer Maschine relativ zueinander ermittelt werden können, aufweisend Verfahrensschritte wie im Anspruch 1 definiert.

Die Erfindung betrifft eine Maschine, aufweisend wenigstens zwei relativ zueinander, bezüglich einer Drehachse bewegliche Glieder, einen einen Motor aufweisenden Antrieb zum Bewegen der Glieder relativ zueinander, einen mit dem Motor gekoppelten Resolver, der vorgesehen ist, eine Winkelstellung des Rotors des Motors relativ zu dessen Stator zu ermitteln, und eine mit dem Antrieb und dem Resolver verbundene Steuervorrichtung, die eingerichtet ist, die Winkelstellung der beiden Glieder relativ zueinender gemäß dem erfindungsgemäßen Verfahren zu ermitteln. Die erfindungsgemäße Maschine ist insbesondere ein Industrieroboter, der einen Roboterarm mit mehreren Gliedern und Antrieben zum Bewegen der Glieder, sowie eine mit den Antrieben verbundene Steuervorrichtung aufweist, die eingerichtet ist, die Antriebe für ein Bewegen der Glieder relativ zueinander anzusteuern.

Die Verwendung von Resolvern zum Ermitteln der Winkelstellung zweier Glieder relativ zueinander ist dem Fachmann im Prinzip bekannt. Unter einem Resolver versteht man einen elektromagnetischen Messumformer zur Wandlung der Winkelstellung zweier relativ zueinender bewegter Bauteile in elektrische Ausgangssignale. Zwei relativ zueinander bewegte Bauteile sind beispielsweise zwei bezüglich einer Drehachse drehbar gelagerte Glieder oder ein Rotor eines Motors, der sich relativ zum Stator des Motors dreht.

Die beiden Glieder können beispielsweise mittels eines Motors der Maschine relativ zueinander bewegt werden, sodass die Ausgangssignale des Resolvers der Winkelstellung des Rotors des Motors relativ zu dessen Stator zugeordnet ist. Vorzugsweise wird das wenigstens eine Ausgangssignal des Resolvers bzw. die Kombination der beiden Ausgangssignale über wenigstens eine gesamte Motorumdrehung des Motors mit dem entsprechenden Soll-Wert verglichen. Bei einer gesamten Motorumdrehung dreht sich die Welle bzw. der Rotor des Motors relativ zum Stator des Motors um 360°.

Resolver umfassen z.B. zwei um 90° versetzte Wicklungen und eine bezüglich einer Drehachse rotierbare weitere Wicklung. Im Betrieb des Resolvers wird dessen weitere Wicklung mit einer elektrischen Wechselspannung beaufschlagt, wodurch in den feststehenden Wicklungen jeweils eine elektrische Wechselspannung induziert wird, welche um 90° phasenversetzt zueinander sind. Die beiden Wechselspannungen sind die Ausgangssignale der beiden feststehenden Wicklungen bzw. des Resolvers. Da in der Regel einige dieser Wicklungen rotatorisch versetzt n - fach angebracht sind (man spricht bei dieser Mehrfachheit hier wie bei Servomotoren von der Polpaarzahl n), wiederholen sich die ergebenden Ausgangssignale bei idealer Fertigung periodisch in 1/n der Motorumdrehung, so dass ein ideal gefertigter Resolver der Polpaarzahl n theoretisch nur als Absolutwertgeber für 1/n Motorumdrehungen dienen kann.

Bei idealen bzw. ideal angenommenen Resolvern sind dessen Ausgangssignale exakt um 90° versetzt phasenverschoben und erzeugen sinusförmige Ausgangssignale gleicher Amplitude mit Periode 1/n Motorumdrehung. Sind die Ausgangssignale normiert, so ist bei korrekt arbeitendem idealen Resolver die Summe der Quadrate der Ausgangssignale stets 1,0.

Reale Bauteile, also auch reale Resolver unterscheiden sich jedoch in der Praxis von idealen Bauteilen bzw. von als ideal angenommenen Bauteilen. Ausgangssignale realer Resolver sind z.B. nicht exakt um 90° Phasen verschoben, sodass die Summe der Quadrate der Ausgangssignale eben nicht stets 1,0 ist. Ebenso sind ist die n-fache Anordnung der Polpaare in der Regel nicht exakt symmetrisch. Dadurch ergibt sich, dass auch die Ausgangssignale von Resolvern der Polpaarzahl n (ohne Berücksichtigung weiterer Störeinflüsse) nicht periodisch in 1/n Motorumdrehungen sind, sondern tatsächlich periodisch in 1 Motorumdrehung. Die Signale sind zwar fast periodisch in 1/n Motorumdrehung, so dass die tatsächliche Periodizität erst in 1 Motorumdrehung bisher als Störung vernachlässigt wurde, die eher zu Problemen führte, als dass sie nutbringend analysiert wurde.

Sind die zu erwartenden Ausgangssignale des Resolvers bekannt, dann wird erfindungsgemäß wenigsten eines der Ausgangssignale mit einem dem Resolver zugeordneten Soll-Wert des fraglichen Ausgangssignals verglichen. So können insbesondere Absolutwerte der beiden Ausgangssignale an extremalen Stellungen ausgenutzt werden, um bei bestimmten Stellungen des Resolvers eindeutig auf die Winkelstellung, insbesondere auf die Winkelstellung des Motors rückzuschließen.

Unterscheidet sich das fragliche Ausgangssignal von seinem Soll-Wert maximal um den vorgegebenen Wert, dann werden die Ausgangssignale für die Winkelberechnung verwendet, andererseits verworfen. Dies stellt somit einen Plausibilitätstest bzw. eine Plausibilitätsprüfung der Ausgangssignale des Resolvers dar.

Der vorgegebene Wert ist z.B. ein maximal zu erwartendes Rauschen, mit dem die Ausgangssignale behaftet sind.

Alternativ wird die Kombination der beiden Ausgangssignale verwendet und mit dem Soll-Wert der Kombination der beiden Ausgangssignale verglichen. Ein Beispiel einer Kombination der Ausgangssignale ist die Summe der Quadrate der Ausgangssignale.

Nach dem erfindungsgemäßen Verfahren sind die Ausgangssignale normiert. Dann ist die Kombination der Ausgangssignale die Summe der Quadrate der normierten Ausgangssignale und der Soll-Wert f der Kombination der beiden Ausgangssignale genügt folgender Vorschrift:

$$f = 1 + a \cdot \sin(x + b)$$

wobei der Parameter *a* eine Konstante mit einem positiven Wert größer Null und der Parameter b ein konstanter Wert ist, die sich aufgrund der Fertigungstoleranz des Resolvers ergeben und der Soll-Wert *f* über die Winkelstellung des Rotors des Motors aufgetragen ist.

Die Parameter *a* und *b* können z.B. mittels einer Parameteridentifikation durch Auswerten folgender Vorschrift:

$$u_1{}^2 + u_2{}^2 = 1 + a \cdot \sin(x + b)$$

bestimmt werden, wobei die Ausgangssignale des Resolvers $u_1$, und $u_2$ sind und x den Motorwinkel darstellt, also bei einer Motorumdrehung von 0 nach $2\pi$ läuft. Insbesondere wird für die Parameteridentifikation der Rotor des Motors wenigstens um eine gesamte Umdrehung gedreht.

Nach dem erfindungsgemäßen Verfahren weist dieses folgende Verfahrensschritte auf:

- Erzeugen von diskreten Ausgangssignale des Resolvers durch insbesondere zyklisches Abtasten der Ausgangssignale,
- Ermitteln des Soll-Wertes für alle theoretisch möglichen diskreten Winkelstellungen des Motors während wenigstens einer gesamten Motorumdrehung,
- Vergleichen der Summe der normierten Quadrate der diskreten Ausgangssignale mit den entsprechenden Soll-Werten, und
- Verwenden nur derjenigen diskreten Ausgangssignale für das Ermitteln der Winkelstellung des Rotors relativ zum Stator des Motors für diejenigen diskreten Ausgangssignale, für die sich die fragliche Summe der Quadrate der normierten Ausgangssignale von dem Soll-Wert maximal um den vorgegebenen Wert unterscheiden.

Vorzugsweise wird ausgenutzt, dass es einen Bereich für Winkelstellungen des Resolvers gibt, in der eine Zuordnung zu einer Winkelstellung eindeutig ist oder die zumindest nicht zwei Hypothesen über eine komplette Motorumdrehung nicht beide plausibel sein können.

Um eine Vorauswahl plausibler Ausgangssignale des Resolvers zu erhalten, können gemäß einer Variante des erfindungsgemäßen Verfahrens nur diejenigen normierten Ausgangssignale verwendet werden, welche im Bereich [1-*a-r*, 1+*a+r*] liegen.

Um den Betrieb der erfindungsgemäßen Maschine auch dann zu ermöglichen, wenn die Ausgangssignale des Resolvers nicht plausibel sind, werden nach einer Ausführungsform des erfindungsgemäßen Verfahrens die aktuellen Winkelstellungen der beiden Glieder relativ zueinander geschätzt, solange sich die fragliche Summe der Quadrate der normierten Ausgangssignale von dem Soll-Wert um mehr als den vorgegebenen Wert unterscheiden.

Um eine Verdrehung des Resolvers während einer Unterbrechung einer elektrischen Versorgungsspannung zu erkennen, können nach einer Ausführungsform des erfindungsgemäßen Verfahrens folgende Verfahrensschritte durchgeführt werden:

- Speichern der ermittelten Winkelstellungen,
- nachdem nach einem Ausfall einer für die Ermittlung der Winkelstellung notwendigen elektrischen Versorgungsspannung diese wieder verfügbar ist, Vergleichen des unmittelbar nach der wieder verfügbaren Versorgungsspannung ermittelten Winkelstellung mit der unmittelbar vor dem Ausfall der Versorgungsspannung gespeicherten Winkelstellung, und
- Aufgrund des Vergleichens, Ermitteln, ob der Resolver während des Ausfalls der Versorgungsspannung verdreht wurde.

Ein Ausführungsbeispiel der Erfindung ist exemplarisch in den beigefügten schematischen Zeichnungen dargestellt. Es zeigen:

Fig. 1     einen Roboter mit einem Roboterarm und einer Steuervorrichtung,

Fig. 2     einen Resolver mit 1 Polpaar,

Fig. 3     Ausgangssignale eines idealen Resolvers mit 3 Polpaaren und

Fig. 4     Ausgangssignale eines realen Resolvers mit 3 Polpaaren.

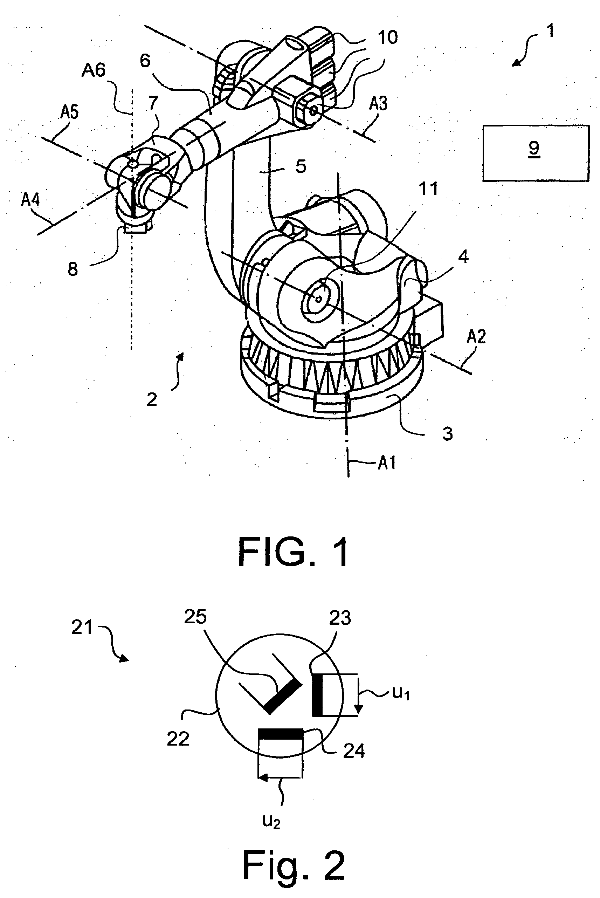

Die Fig. 1 zeigt in einer perspektivischen Darstellung einen Roboter 1 mit einem Roboterarm 2.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Roboter 1 bzw. dessen Roboterarm 2 zu bewegen, umfasst dieser in allgemein bekannter Weise mit einer Steuervorrichtung 9 verbundene Antriebe, die insbesondere elektrische Antriebe sind. In der Figur 1 sind nur einige der elektrischen Motoren 10, 11 dieser Antriebe gezeigt. Auf der Steuervorrichtung 9 läuft ein Rechenprogramm, mittels dem die Steuervorrichtung 9 im Betrieb des Roboters R diesen beispielsweise derart ansteuert, dass der Flansch 8 oder ein sogenannter Tool Center Point eine vorbestimmte Bewegung ausführt. Gegebenenfalls regelt die Steuervorrichtung 9 die Antriebe, wie dies im Prinzip dem Fachmann bekannt ist.

Um die Winkelstellungen der einzelnen Glieder des Roboterarms 2 relativ zueinender zu bestimmen, umfasst der Roboterarm 2 in der Fig. 2 gezeigte Resolver 21, welche in dem Fachmann im Prinzip bekannter Weise an den die einzelnem Glieder bewegenden Motoren 10, 11 angeordnet sind. Resolver werden bisweilen auch als Winkelgeber bezeichnet.

Unter einem Resolver versteht man einen elektromagnetischen Messumformer insbesondere zur Wandlung der Winkellage zweier relativ zueinander bewegter Bauteile in elektrische Ausgangssignale. Zwei relativ zueinander bewegte Bauteile sind beispielsweise zwei bezüglich einer Drehachse drehbar gelagerte Glieder oder ein Rotors eines Motors, der sich relativ zum Stator des Motors dreht.

Im Falle des vorliegenden Ausführungsbeispiels eines Resolvers mit Polpaarzahl 1 weisen die Resolver 21 jeweils ein insbesondere zylinderförmig ausgeführtes Gehäuse 22 auf, in dem zwei um 90° versetzte Wicklungen (erste Wicklung 23, zweite Wicklung 24) fest relativ zum Gehäuse 21 angeordnet sind. Die Resolver 21 weisen ferner jeweils eine bezüglich einer Drehachse rotierbare dreipoolpaarige weitere Wicklung 25 auf. Ist z.B. der Motor 10 mit einem Resolver 21 versehen, dann dreht sich die weitere Wicklung 25 mit dem Rotor bzw. der Welle des Motors 10 relativ zu seinem Stator.

Im Betrieb des Resolvers 21 wird dessen weitere Wicklung 25 mit einer elektrischen Wechselspannung beaufschlagt, wodurch in den feststehenden Wicklungen 23, 24 jeweils eine elektrische Wechselspannung induziert wird, welche um 90° phasenversetzt zueinander sind. Die beiden Wechselspannungen sind die Ausgangssignale $u_1$, $u_2$ der beiden feststehenden Wicklungen 23, 24, wobei das Ausgangssignal der ersten Wicklung 23 mit dem Bezugzeichen $u_1$ und das Ausgangssignal der zweiten Wicklung 24 mit dem Bezugszeichen $u_2$ versehen ist. Die Resolver 21 sind mit der Steuervorrichtung 9 verbunden, sodass die Ausgangssignale $u_1$, $u_2$ der Resolver 21 der Steuervorrichtung 9 für eine Auswertung zur Verfügung stehen.

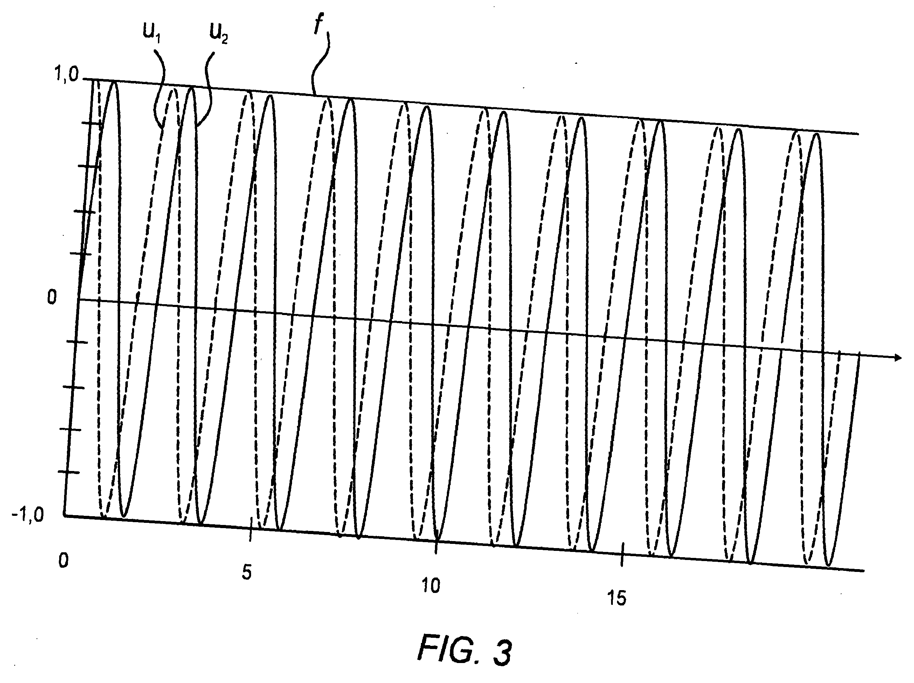

Angenommen, bei dem Resolver 21 handelte es sich um ein ideales Bauteil, dann sind dessen feststehenden Wicklungen 23, 24 exakt um 90° versetzt angeordnet und erzeugen Ausgangssignale $u_1$, $u_2$ gleicher Amplitude. Dies ist in der Figur 3 dargestellt, wobei das erste Signal $u_1$ einem Kosinus und das zweite Signal $u_1$ einem Sinus folgt. Die Ausgangssignale $u_1$, $u_2$ sind dabei über die Stellung der Welle bzw. des Rotors des fraglichen Motors 10, 11 aufgetragen (mathematische Notation: Eine Umdrehung der Welle entspricht $2 \cdot \pi$). Sind die Ausgangssignale $u_1$, $u_2$ normiert, so sind deren Amplituden gleich 1,0 und es ergibt sich beispielsweise für die Ausgangssignale $u_1$, $u_2$ folgendes:

$$u_1 = cos(x)$$

$$u_2 = sin(x)$$

Mittels der beiden Ausgangssignale $u_1$, $u_2$ kann dann die Steuervorrichtung 9 die Winkelstellung des Rotors des fraglichen Motors 10, 11 zu seinem Stator berechnen.

Für normierte Ausgangssignale $u_1$, $u_2$ ist außerdem die Summe ihrer Quadrate stets gleich 1,0, es gilt also:

$$f_{ideal} = u_1^2 + u_2^2 = 1,0$$

wobei $f_{ideal}$ ein Plausibilitätssignal ist, aufgrund dessen Auswertung ein Rückschluss darauf gezogen werden kann, ob die gemessenen Ausgangssignale $u_1$, $u_2$ korrekt sein können, d.h. indem analysiert wird, ob die Summe der Quadrate der beiden normierten Ausgangssignale $u_1$, $u_2$ gleich 1,0 sind bzw. in etwa gleich 1,0 sind.

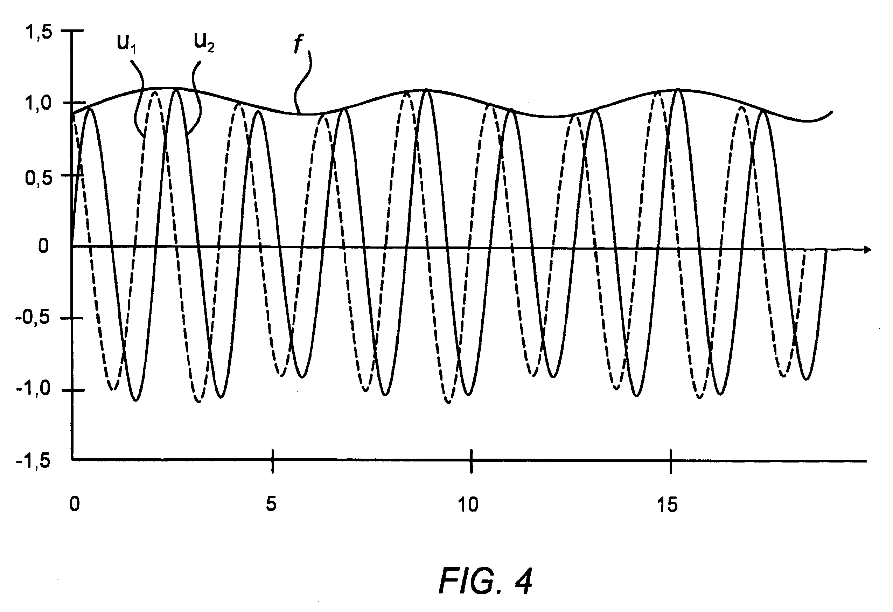

Reale Bauteile, also auch reale Resolver 21 unterscheiden sich jedoch in der Praxis von idealen Bauteilen bzw. von als ideal angenommenen Bauteilen. Die Fig. 4 zeigt zumindest näherungsweise die Verläufe der Ausgangssignale $u_1$, $u_2$ und des Werts des Plausibilitätssignals $f$ für einen realen Resolver mit Polpaarzahl 3 (Modifikation zu 21, hier wurde der Einfachheit halber die (weniger interessante) Polpaarzahl 1 verwendet) der nicht perfekt rotationssymmetrisch mit Periode 3 gefertigt wurde. Dadurch ergibt sich für das erwartete Plausibilitätssignal $f$ zumindest in etwa folgendes:

$$f = u_1^2 + u_2^2 = 1 + a \cdot \sin(x + b)$$

wobei der Parameter $a$ eine Konstante mit einem positiven Wert größer Null und der Parameter $b$ ein konstanter Wert ist, die sich aufgrund der Fertigungstoleranz des Resolvers 21 im Wesentlichen zufällig ergeben und b insbesondere im Bereich von $0,2 \cdot \pi$ liegt und x den Motorwinkel repräsentiert.

Im Falle des vorliegenden Ausführungsbeispiels wurden vorab die Parameter $a$, $b$ für jeden der verwendeten Resolver 21 bestimmt und in der Steuervorrichtung 9 abgespeichert. Diese wurden z.B. im Rahmen einer Parameteridentifikation z.B. mit einer Ausgleichsrechung ermittelt, indem beispielsweise mit mindestens einer, vorzugsweise mehreren Umdrehungen der Welle des fraglichen Motors 10, 11 die jeweiligen Plausibilitätssignale $f$ aufgezeichnet und anschließend analysiert wurden. Dies führt im Falle des vorliegenden Ausführungsbeispiels die Steuervorrichtung 9 mittels eines geeigneten Rechenprogramms automatisiert durch.

Zudem kann eine Grenze, insbesondere eine Rauschgrenze $r$, die vorzugsweise kleiner als der Parameter $a$ ist, festgelegt werden, die das normal erwartete maximale Signalrauschen des fraglichen Resolvers 21 repräsentiert. Insbesondere bei Verwendung statistischer Methoden kann die Rauschgrenze $r$ auch größer oder gleich dem Parameter a sein, so dass das prinzipiell beschriebene Verfahren anwendbar bleibt.

Im Falle des vorliegenden Ausführungsbeispiels läuft auf der Steuervorrichtung 9 ein Rechenprogramm, welches die Ausgangssignale $u_1$, $u_2$ verarbeitet. Um dies zu erreichen, werden die Ausgangssignale $u_1$, $u_2$ zunächst z.B. mittels eines A/D Wandlers abgetastet und gegebenenfalls mittels analoger und/oder digitaler Filter gefiltert. Insbesondere werden die Ausgangssignale $u_1$, $u_2$ zyklisch mit einer ausreichend hohen Frequenz abgetastet. Die abgetasteten

Ausgangssignale $u_1$, $u_2$ werden anschließend mittels des Rechenprogramms weiter verarbeitet.

Wird die Rauschgrenze $r$ verwendet, dann kann das auf der Steuervorrichtung 9 laufende Rechenprogramm derart ausgeführt werden, dass es zunächst eine erste Plausibilitätskontrolle der Ausgangssignale $u_1$, $u_2$ oder einer Kombination der beiden durchführt und z.B. nur solche Werte der abgetasteten Ausgangssignale $u_1$, $u_2$ für eine Ermittlung der Winkelstellung des Rotors des fraglichen Motors 10, 11 zu seinem Stator relativ zueinander verwendet, für die ermittelten Werte der normierten Ausgangssignale $u_1$, $u_2$ der Wert $f = u_1^2 + u_2^2$ im Bereich [1-a-r, 1+a+r] liegt.

Liegt der ermittelte Wert außerhalb des Bereichs [1-a-r, 1+a+r], dann werden diese abgetasteten Ausgangssignale $u_1$, $u_2$ verworfen, also nicht zum Ermitteln der Winkelstellung des Rotors des fraglichen Motors 10, 11 zu seinem Stator verwendet. Dies stellt insbesondere eine erste Plausibilitätskontrolle der Ausgangssignale $u_1$, $u_2$ des fraglichen Resolvers 21 dar. Für diejenigen normierten Ausgangssignale $u_1$, $u_2$ des fraglichen Resolvers 21, die innerhalb des Bereichs [1-a-r, 1+a+r] liegen, ermittelt anschließend die Steuervorrichtung 9 den dem Resolver 21 zugeordneten Resolverwinkel $\varphi_{rest}$, d. h. die entsprechende Winkelstellung des Rotors relativ zum Stator des fraglichen Motors 10, 11 modulo der Polpaarzahl n. Dies erfolgt z.B. mittels folgender Gleichung:

$$\varphi_{res} = \mathrm{Arctan2}(u_2, u_1)$$

Im Falle des vorliegenden Ausführungsbeispiels ist die Steuervorrichtung 9 insbesondere derart ausgeführt, dass sie eine zweite Plausibilitätsprüfung durchführt, indem sie für alle theoretisch möglichen diskreten Winkelstellungen des fraglichen Motors 10, 11 während einer gesamten Motorumdrehung

$$(\{\varphi_{\mathrm{mot},1}, \varphi_{\mathrm{mot},2}, \cdots, \varphi_{\mathrm{mot},n}\} = \{\frac{\varphi_{\mathrm{res}}}{n}, \frac{\varphi_{\mathrm{res}}}{n} + \frac{2\pi}{n}, \ldots, \frac{\varphi_{\mathrm{res}}}{n} + \frac{2\pi(n-1)}{n}\})$$ die zu der ermittelten Resolverstellung korrespondieren, den erwarteten Wert des Plausibilitätssignals $f$ ermittelt, also die Funktion $1 + a \cdot \sin(x + b)$ für alle diese potenziellen $\varphi_{mot}$ ermittelt, die sich aus der modulo-Rechnung ergeben Alle Winkelstellungen des fraglichen Motors 10, 11, in denen die Summe der Quadrate der normierten Ausgangssignale $u_1$, $u_2$ mit dem erwarteten Wert des Plausibilitätssignals $f = (1 + a \cdot \sin(x + b))$ um mehr als $r$ abweichen, werden als unplausibel eingeteilt (wobei hier für x das jeweilige $\varphi_{mot}$ aus $\{\varphi_{mot,1}, \varphi_{mot,2}, \cdots, \varphi_{mot,n}\}$ einzusetzen ist).

Gelten im Falle des vorliegenden Ausführungsbeispiels alle theoretischen Winkelstellungen $\varphi_{mot}$ in diesem Sinne als unplausibel, wird die gesamte Ermittlung der Winkelstellungen als Fehlmessung angesehen.

Aus der Form des Plausibilitätssignals $f$ ergibt sich, dass in einem Teil der Stellungen des Resolvers 21 nur eine Winkelstellung des fraglichen Motors 21 als plausibel gilt. Typischerweise sind das zusammenhängende Bereiche, die sich um die Stellung des Resolvers 21, die zur Winkelstellung des fraglichen Motors 10, 11 gehört, an denen das erwartete Plausibilitätssignal $f$ sein Maximum bzw. sein Minimum annimmt.

In einem solchen Fall kann eine Winkelstellung des Motors 10, 11 als eindeutig gemessen gewertet werden.

Winkelstellungen des fraglichen Motors 10, 11, die die zweite Plausibilitätsprüfung nicht bestehen, werden insbesondere als eindeutig ausgeschlossen angesehen.

Im Normalfall wird also eine echte Teilmenge der möglichen Winkelstellungen des fraglichen Motors 10, 11 die zweite Plausibilitätsprüfung bestehen. Eindeutigkeit wird normalerweise nur in bestimmten Stellungsbereichen des Resolvers 21 bestehen.

Im Falle des vorliegenden Ausführungsbeispiels kann die Steuervorrichtung 9 auch derart eingerichtet sein, dass solange keine Signalverluste bestehen, die zusätzlich gewonnene Information (Plausibilität aller zu einer Resolververstellung denkbaren Motorstellungen) nur zur Verifikation verwendet wird. Die aktuelle Motorstellung sollte dann immer in der Menge der plausiblen Stellungen sein. Ist dies nicht der Fall, gegebenenfalls unter Berücksichtigung von Entprellung, wird das aktuelle Signal, also die aktuell ermittelten Ausgangssignale $u_1$, $u_2$ nicht verwendet und die Winkelstellung des Resolvers 21 geschätzt. Gegebenenfalls kann hier noch unterschieden werden, ob es gar keine plausiblen Motorwinkel gibt oder nur der erwartete Motorwinkel, der sich aus dem zuletzt gemessenen Motorwinkel bei bekannter Drehgeschwindigkeit und bekannter Abtastzeit ergibt, als nicht plausibel gilt.

Es ist möglich, dass die Steuervorrichtung 9 derart eingerichtet ist, dass die Ermittlung der Winkelstellung bei ungültigen Ausgangssignalen $u_1$, $u_2$ so lange geschätzt wird, bis die Ausgangssignale $u_1$, $u_2$ wieder die zweite Plausibilitätsprüfung erfüllen.

Um eine genügend gute Schätzung der Winkelstellung zu erhalten, wird beispielsweise der Wert der Winkelstellung maximal für eine halbe Motorumdrehung geschätzt.

Falls die Zeit des Signalverlusts kurz genug, aber länger war als die Zeit, in der eine halbe Resolverumdrehung denkbar wäre, würde spätestens nach einer Motorumdrehung eine falsch geschätzte Motorstellung erkannt werden, da nur die richtige Stellung die zweite Plausibilitätsprüfung bei einer gesamten Motorumdrehung permanent besteht. Gegebenenfalls kann dieser Zustand auch der Applikation zur Verfügung gestellt werden, da nach einem "Blindflug" in dieser Zeitspanne zwar die aktuelle Position nicht als sicher verifiziert, sondern nur noch nicht falsifiziert angesehen werden kann, jedoch nach einer weiteren Motorumdrehung garantiert verifiziert werden kann.

Im Falle des vorliegenden Ausführungsbeispiels kann die Steuervorrichtung 9 auch derart ausgeführt sein, eine mittels des Resolvers 12 gemessene Winkelstellung zu speichern, um die gespeicherte ermittelte Winkelstellung nach einem Wiedereinschalten des fraglichen Motors 10, 11 nach einem Spannungsausfall mit einer nach einem Einschalten des fraglichen Motors 10, 11 erneut mittels des Resolvers 21 ermittelten Winkelstellung zu vergleichen. Dadurch kann erreicht werden, nach einem Abschalten und Wiedereinschalten des fraglichen Motors 10, 11 feststellen zu können, ob der fragliche Motor 10, 11 nicht im spannungslosen Zustand der Steuervorrichtung 9 der Resolver 21 bewegt wurde.

Im Falle des vorliegenden Ausführungsbeispiels wird nicht auf Gleichheit der beiden ermittelten Winkelstellungen überprüft, sondern nur dann auf eine ungewollte Verdrehung des Resolvers 21 geschlossen, wenn sich die beiden ermittelten Winkelstellungen um einen vorgegeben Betrag unterscheiden. Das vorliegende Verfahren erlaubt es, diesen Betrag um den Faktor n zu erhöhen, ohne die Wahrscheinlichkeit von unerkannten Verdrehungen zu erhöhen. Insbesondere diese Eigenschaft erlaubt es vorzugsweise die Verwendung anderer Bauteile in den Motoren, insbesondere Bremsen, die ansonsten ausgeschlossen sind, weil sie bereits im Normalfall zu so starken Verdrehungen führen, dass die Wahrscheinlichkeit von unerkannten Verdrehungen zu hoch würde, da der vorgegebene Betrag den Normalfall überschreiten muss, um den Normalfall nicht als Fehlerfall zu werten.

Im Falle des vorliegenden Ausführungsbeispiels kann es auch vorgesehen sein, dass wenn die Beziehung von Rauschgrenze r und dem Parameter a so ungünstig ist, dass es nicht mit Sicherheit eine Winkelstellung des Resolvers 21 gibt, in der nur eine Winkelstellung des fraglichen Motors 10, 11 plausibel ist. In diesem Fall ist es möglich, mit statistischen Mitteln aufgrund mehrerer aufeinanderfolgender Messungen die Zuordnung von gemessenen Winkelstellungen des Resolvers 21 zu Winkelstellungen des fraglichen Motors 10, 11 durchzuführen. Während einer ganzen Motorumdrehung werden die n Motorstellungen bewertet, die sich jeweils durch einen Versatz um 2*pi/n ergeben. Die tatsächliche Stellung wird die zweite Plausibilitätsprüfung mit der signifikant höchsten Häufigkeit bestehen. Man kann als Erweiterung auch den tatsächlichen Abstand des gemessenen Plausibilitätssignals ($u_1^2 + u_2^2$) berücksichtigen, also diejenige Motorstellung nach einer gesamten Motorumdrehung als reale Motorstellung akzeptieren, deren Plausibilitätsfunktion zum gemessenen Plausibilitätssignal den geringsten L2-Abstand hat (least-square-Methode).

Durch bewusste Auswahl von "schlechten Resolvern" oder der bewussten Produktion von Resolvern mit Unwucht (z.B. elektrisch asymmetrische Wicklung bestimmter Spulen) kann dafür gesorgt werden, dass die Rauschgrenze r gegenüber dem Parameter a relativ klein wird.

Das beschrieben Verfahren ist nicht notwendigerweise der einzige, mit der die Unwucht der Signale ausgenutzt werden kann. Alternativ könnte z.B. nur die Absolutwerte von Sinus-Signal und Kosinus-Signal an extremen Stellungen ausgenutzt werden, um bei bestimmten Resolverstellungen eindeutig auf die Motorstellung rückzuschließen.

## Patentansprüche

1.  Verfahren zum Überprüfen der Plausibilität der Ausgangssignale ($u_1$, $u_2$) eines Resolvers (21) mit Polpaarzahl n, mittels derer eine Winkelstellung (x) zweier bezüglich einer Drehachse (A1- A6) drehbar gelagerter Glieder (3-7) einer Maschine (R) relativ zueinander ermittelt werden können, wobei die beiden Glieder (3-7) mittels eines Motors (10, 11) der Maschine (R) relativ zueinander bewegt werden, aufweisend folgende Verfahrensschritte:

    - während des bestimmungsgemäßen Betriebs der Maschine (R) und mittels des Resolvers (21), Erzeugen zweier diskreter Ausgangssignale ($u_1$, $u_2$), mittels derer die Winkelstellung der beiden Glieder (3-7) relativ zueinander ermittelbar ist, wobei die beiden Ausgangssignale ($u_1$, $u_2$) des Resolvers (21) der Winkelstellung (x) des Rotors des Motors (10, 13) relativ zu dessen Stator zugeordnet sind und die beiden Ausgangssignale ($u_1$, $u_2$) für wenigstens eine komplette Motorumdrehung des Motors (10, 11) ausgewertet werden,
    - Vergleichen der Summe der normierten Quadrate der diskreten Ausgangssignale ($u_1$, $u_2$) mit einem entsprechenden Soll-Wert (f), der für alle theoretisch möglichen diskreten Winkelstellungen des Motors (10, 11) während einer gesamten Motordrehung ermittelt wird, und
    - Verwenden nur derjenigen diskreten Ausgangssignale ($u_1$, $u_2$) für das Ermitteln der Winkelstellung des Rotors relativ zum Stator des Motors (10, 11) für diejenigen diskreten Ausgangssignale ($u_1$, $u_2$), für die sich die fragliche Summe der Quadrate der normierten Ausgangssignale ($u_1$, $u_2$) von dem Soll-Wert (f) maximal um einen vorgegebenen Wert (r) unterscheiden,

    wobei die Ausgangssignale ($u_1$, $u_2$) normiert sind, eine Kombination der Ausgangssignale ($u_1$, $u_2$) die Summe der Quadrate der normierten Ausgangssignale ist und der Soll-Wert (f) dieser Kombination der beiden Ausgangssignale ($u_1$, $u_2$) folgender Vorschrift genügt:

$$f = 1 + a \cdot \sin(x + b)$$

wobei die Parameter *a* eine Konstante mit einem positiven Wert größer Null und *b* ein konstanter Wert ist, die sich aufgrund der Fertigungstoleranz des Resolvers (21) ergeben und der Soll-Wert (f) über die Winkelstellung (x)des Rotors des Motors (10, 11) zu dessen Stator aufgetragen ist.

2. Verfahren nach Anspruch 1, aufweisend Bestimmen der Parameter *a* und *b* bei mittels einer Parameteridentifikation durch Auswerten folgender Vorschrift:

$$u_1{}^2 + u_2{}^2 = 1 + a \cdot \sin(x + b)$$

3. Verfahren nach Anspruch 1 oder 2, bei dem der vorgegebene Wert ein maximal zu erwartendes Rauschen (r) ist, mit dem die Ausgangssignale ($u_1$, $u_2$) oder eine Kombination der beiden Ausgangssignale ($u_1$, $u_2$) behaftet sind.

4. Verfahren nach einem der Ansprüche 1 bis 3, bei dem die zwei diskreten Ausgangssignale ($u_1$, $u_2$) durch zyklisches Abtasten erzeugt werden.

5. Verfahren nach einem der Ansprüche 1 bis 4, aufweisend folgenden Verfahrensschritt: Verwenden nur derjenigen normierten Ausgangssignale ($u_1$, $u_2$), welche im Bereich [1-*a-r*, 1+*a+r*] liegen.

6. Verfahren nach einem der Ansprüche 1 bis 5, aufweisend Schätzen der aktuellen Winkelstellung (x) der beiden Glieder (3-7) relativ zueinander, solange sich die fragliche Summe der Quadrate der normierten Ausgangssignale ($u_1$, $u_2$) von dem Soll-Wert (f) um mehr als den vorgegebenen Wert (r) unterscheiden.

7. Verfahren nach einem der Ansprüche 1 bis 6, aufweisend folgende Verfahrensschritte:

   - Speichern der ermittelten Winkelstellungen,
   - nachdem nach einem Ausfall einer für die Ermittlung der Winkelstellung notwendigen elektrischen Versorgungsspannung diese wieder verfügbar ist, Vergleichen des unmittelbar nach der wieder verfügbaren Versorgungsspannung ermittelten Winkelstellung mit der unmittelbar vor dem Ausfall der Versorgungsspannung gespeicherten Winkelstellung, und
   - Aufgrund des Vergleichens, Ermitteln ob der Resolver während des Ausfalls der Versorgungsspannung verdreht wurde.

8. Maschine, insbesondere Industrieroboter, aufweisend wenigstens zwei relativ zueinander, bezügliche einer Drehachse (A1-A2) bewegliche Glieder (3-7), einen einen Motor (10, 11) aufweisenden Antrieb zum Bewegen der Glieder (3-7) relativ zueinander, einen mit dem Motor (10, 11) gekoppelten Resolver (21), der vorgesehen ist, eine Winkelstellung des Rotors des Motors (10, 11) relativ zu dessen Stator zu ermitteln, und eine mit dem Antrieb und dem Resolver (21) verbundene Steuervorrichtung (9), die eingerichtet ist, die Winkelstellung der beide Glieder (3-7) relativ zueinender gemäß dem Verfahren nach einem der Ansprüche 1 bis 7 zu ermitteln.

## Claims

1. A method for testing the plausibility of the output signals ($u_1$, $u_2$) of a resolver (21) with pole pair number n, by which an angular position (x) of two links (3-7) of a machine (R) pivoted with respect to an axis (A1-A6) of rotation can be determined, wherein the two links (3-7) are moved in relation to one another by a motor (10, 11) of the machine (R), the method comprising:

   - generating two discrete output signals ($u_1$, $u_2$) with the resolver (21) during the normal operation of the machine (R), by which the angular position of the two links (3-7) in relation to one another can be determined, wherein the two output signals ($u_1$, $u_2$) of the resolver (21) are assigned to the angular position (x) of a rotor of the motor (10, 11) in relation to a stator of the motor (10, 11), and the two output signals ($u_1$, $u_2$) are evaluated for at least one complete motor revolution,
   - comparing the sum of the normalized squares of the discrete output signals ($u_1$, $u_2$) with a corresponding

target value (f), which is determined for all theoretically possible discrete angular positions of the motor (10, 11) during an entire motor revolution, and

- using only those discrete output signals ($u_1$, $u_2$) for determining the angular position of the rotor in relation to the stator of the motor (10, 11) for those discrete output signals ($u_1$, $u_2$), for which the sum of the squares of the normalized output signals ($u_1$, $u_2$) in question differs from the target value (f) no more than by a predefined value (r),

wherein the output signals ($u_1$, $u_2$) are normalized, a combination of the output signals ($u_1$, $u_2$) is the sum of the squares of the normalized output signals, and the target value (f) of the combination of the two output signals ($u_1$, $u_2$) meets the following requirement:

$$f = 1 + a \cdot \sin(x + b)$$

wherein the parameter $a$ is a constant with a positive value greater than zero and the parameter $b$ is a constant value that arises on the basis of the production tolerance of the resolve (21) and the target value (f) is plotted against the angular position (x) of the rotor of the motor (10, 11) relative to the stator.

2. The method of claim 1, comprising determining the parameters $a$ and b by means of a parameter identification in accordance with the following requirement:

$$u_1{}^2 + u_2{}^2 = 1 + a \cdot \sin(x + b)$$

3. The method of claim 1 or 2, wherein the predefined value is a maximum noise (r) to be expected with which the output signals ($u_1$, $u_2$), or a combination of the two output signals ($u_1$, $u_2$), are filled.

4. The method of any of claims 1 to 3, wherein the two discrete output signals ($u_1$, $u_2$) are generated by cyclical scanning.

5. The method of any of claims 1 to 4, further comprising the following step: using only those normalized output signals ($u_1$, $u_2$), that lie in the range [1-$a$-$r$, 1+$a$+$r$], wherein $r$ is the predefined value.

6. The method of any of claims 1 to 5, comprising estimating the current angular position (x) of the two links (3-7) in relation to one another, as long as the relevant sum of the squares of the normalized output signals ($u_1$, $u_2$) differs from the target value (f) by more than the predefined value (r).

7. The method of any of claims 1 to 6, comprising the following steps:

   - saving the determined angular positions,
   - after an electrical supply voltage necessary for determining the angular position is available again after an outage, comparing the angular position determined directly after the supply voltage is once again available to the angular position saved directly before the outage of the supply voltage, and
   - on the basis of the comparison, determining whether the resolver was rotated during the outage of the supply voltage.

8. Machine, in particular an industrial robot, comprising at least two links (3-7) that can be moved in relation to one another with respect to an axis (A1-A2) of rotation, a drive including a motor (10, 11) for moving the links (3-7) in relation to one another, a resolver (21) coupled to the motor (10, 11) and which is provided for determining an angular position of a rotor of the motor (10, 11) in relation to a stator of the motor (10, 11), and a control device (9) operatively coupled with the drive and the resolver (21), the control device (9) being configured to determine the angular position of the two links (3-7) in relation to one another in accordance with the method of any of claims 1 to 7.

**Revendications**

1. Procédé de contrôle de la plausibilité des signaux de sortie ($u_1$, $u_2$) d'un résolveur (21) avec nombre de paires de pôles n, au moyen desquels peut être déterminée une position angulaire (x) de deux membres (3-7) montés rotatifs par rapport l'un à l'autre et par rapport à un axe rotatif (A1-A6) d'une machine (R), les deux membres (3-7) étant déplacés l'un par rapport à l'autre par un moteur (10, 11) de la machine (R), présentant les étapes de procédé suivantes :

- génération, pendant le fonctionnement conforme de la machine (R) et au moyen du résolveur (21), de deux signaux de sortie ($u_1$, $u_2$) discrets au moyen desquels la position angulaire des deux membres (3-7) l'un par rapport à l'autre peut être déterminée, les deux signaux de sortie ($u_1$, $u_2$) du résolveur (21) étant associés à la position angulaire (x) du rotor du moteur (10, 13) par rapport à son stator, et les deux signaux de sortie ($u_1$, $u_2$) étant analysés pour au moins une rotation de moteur complète du moteur (10, 11),

- comparaison de la somme des carrés normalisés des signaux de sortie ($u_1$, $u_2$) discrets avec une valeur de consigne (f) correspondante, qui est déterminée pour toutes les positions angulaires discrètes théoriquement possibles du moteur (10, 11) pendant une rotation de moteur complète, et

- utilisation de seulement les signaux de sortie ($u_1$, $u_2$) discrets pour la détermination de la position angulaire du rotor par rapport au stator du moteur (10, 11) pour les signaux de sortie ($u_1$, $u_2$) discrets pour lesquels la somme en question des carrés des signaux de sortie ($u_1$, $u_2$) normalisés se distinguent de la valeur de consigne (f) au maximum d'une valeur (r) prédéterminée,

les signaux de sortie ($u_1$, $u_2$) étant normalisés, une combinaison des signaux de sortie ($u_1$, $u_2$) étant la somme des carrés des signaux de sortie normalisés, et la valeur de consigne (f) de cette combinaison des deux signaux de sortie ($u_1$, $u_2$) satisfaisant à la règle suivante :

$$f = 1 + a \cdot \sin(x + b) \,,$$

le paramètre $a$ étant une constante avec une valeur positive supérieure à zéro et le paramètre $b$ étant une valeur constante qui résultent de la tolérance de fabrication du résolveur (21) et la valeur de consigne (f) sur la position angulaire (x) du rotor du moteur (10, 11) étant appliquée à son stator.

2. Procédé selon la revendication 1, présentant la détermination des paramètres $a$ et $b$ au moyen d'une identification de paramètres par analyse de la règle suivante :

$$f = 1 + a \cdot \sin(x + b)$$

3. Procédé selon les revendications 1 ou 2, dans lequel la valeur prédéterminée est un bruit (r) à attendre au maximum avec lequel sont entachés les signaux de sortie ($u_1$, $u_2$) ou une combinaison des deux signaux de sortie ($u_1$, $u_2$).

4. Procédé selon l'une des revendications 1 3, dans lequel signaux de sortie ($u_1$, $u_2$) discrets sont engendrés par un échantillonnage cyclique.

5. Procédé selon l'une des revendications 1 à 4, présentant l'étape de procédé suivante : utilisation seulement des signaux de sortie ($u_1$, $u_2$) normalisés qui se situent dans la plage de [1-$a$-$r$, 1+$a$+$r$].

6. Procédé selon l'une des revendications 1 à 5, présentant une évaluation de la position angulaire (x) actuelle des deux membres (3-7) l'un par rapport à l'autre tant que la somme en question des carrés des signaux de sortie ($u_1$, $u_2$) normalisés se distingue de la valeur de consigne (f) de plus que de la valeur (r) prédéterminée.

7. Procédé selon l'une des revendications 1 à 6, présentant les étapes de procédé suivants :

- mémorisation des positions angulaires déterminées,

- après qu'à la suite d'une défaillance d'une tension d'alimentation électrique nécessaire pour la détermination de la position angulaire, celle-ci est de nouveau disponible, comparaison de la position angulaire déterminée directement après la remise à disposition de la tension d'alimentation avec la position angulaire mémorisée directement avant la défaillance de la tension d'alimentation, et

- sur la base de la comparaison, détermination si le résolveur a été tourné pendant la défaillance de la tension d'alimentation.

**8.** Machine, en particulier robot industriel, présentant au moins deux membres (3-7) mobiles l'un par rapport à l'autre et par rapport à un axe de rotation (A1-A2), un entraînement présentant un moteur (10, 11) pour mouvoir les membres (3-7) les uns par rapport aux autres, un résolveur (21) accouplé au moteur (10, 11) qui est prévu pour déterminer une position angulaire du rotor du moteur (10, 11) par rapport à son stator, et un dispositif de commande (9) relié à l'entraînement et au résolveur (21) qui est prévu pour déterminer la position angulaire des deux membres (3-7) l'un par rapport à l'autre selon le procédé selon l'une des revendications 1 à 7.

FIG. 1

Fig. 2

*FIG. 3*

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2211148 A2
- DE 102007057376